# EUROPEAN PATENT SPECIFICATION

(11) **EP 1 144 120 B1**
(45) Date of publication and mention of the grant of the patent: **07.12.2005**
(21) Application number: 99962562.7
(22) Date of filing: 10.12.1999
(51) Int. Cl.: B05B 11/00

(54) **DISPENSING DEVICE FOR A CONTAINER AND METHOD OF MANUFACTURING AND FILLING SUCH A CONTAINER WITH DOSING AND/OR FILLING HEAD**
SPENDER FÜR BEHÄLTER SOWIE VERFAHREN ZUR HERSTELLUNG EINES SOLCHEN BEHÄLTERS UND VERFAHREN ZUM FÜLLEN DESSELBEN, MITTELS EINES FÜLL- ODER DOSIERKOPFES
DISTRIBUTEUR DESTINE A UN RECIPIENT ET PROCEDE DE FABRICATION ET DE REMPLISSAGE DE CE RECIPIENT AU MOYEN D'UNE TETE DE DOSAGE ET/OU DE REMPLISSAGE

(30) Priority: 10.12.1998 NL 1010778; 05.03.1999 NL 1011477; 06.03.1999 NL 1011479; 04.05.1999 NL 1011962; 24.09.1999 NL 1013139
(43) Date of publication of application: 17.10.2001
(73) Proprietor: Afa Polytek B.V., 5705 DE Helmond (NL)
(72) Inventor: MAAS, Wilhelmus, Johannes, Joseph, NL-5711 KV Someren (NL); HURKMANS, Petrus, Lambertus, Wilhelmus, NL-5712 NR Someren (NL)
(74) Representative: Bartelds, Erik
(86) International application number: PCT/NL1999/000760
(87) International publication number: WO 2000/033969

(56) References cited:
- EP-A- 0 286 608
- EP-A- 0 335 505
- EP-A- 0 475 546
- EP-A- 0 516 472
- EP-A- 0 557 714
- EP-A- 0 598 237
- EP-A- 0 701 950
- EP-A- 0 710 507
- EP-A- 0 750 947
- EP-A- 0 761 313
- EP-A- 0 850 695
- DE-A- 19 700 607
- US-A- 2 418 348
- US-A- 2 579 156
- US-A- 3 157 323
- US-A- 3 738 545
- US-A- 4 457 455
- US-A- 4 489 861
- US-A- 4 679 712
- US-A- 4 978 037
- US-A- 5 158 211
- US-A- 5 207 359
- US-A- 5 337 931
- US-A- 5 425 477
- US-A- 5 641 097
- US-A- 5 730 335
- US-A- 5 746 728

## Description

The invention relates to a dispensing device to be connected to a container for dosed dispensing of a fluid, at least a part of the dispensing device being preformed on a neck part of the container and the remaining part of the dispensing device being connected thereto, said dispensing device comprising:
- at least one opening and at least one closing member co-acting with the opening and movable between a position closing the opening and a position leaving clear the opening;
- at least one pump arranged between the container and the opening, the pump having a suction side and a compression side and including a cylinder integrated in the remaining part of the dispensing device and a piston reciprocating therein;
- moveable operating means connected to the piston for operating thereof,
- the piston being connected with biasing means preformed on the neck part of the container and connected with the piston for biasing it to a position of rest;
- means connected to the suction side of the pump for supplying fluid from the container; and
- at least one discharge nozzle connected to the compression side of the pump.

Such a dispensing device is known from US-A-5,746,728. This prior art document discloses a pump for delivering fluid, in particular a sterile fluid from an elastic phial. The pump includes a pump body that is contained in an end part of the phial near the outlet orifice thereof, and a movable piston that is fitted inside the pump body. The end part of the phial is shaped as a concertina. The piston includes an annular operating part that is accommodated in a fold of the concertina-shaped end part.

When the pump is operated by moving the piston, the concertina is deformed and due to the elastic nature of the phial acts as a return spring, forcing the piston back to its original position of rest. This particular arrangement of the pump within the phial is said to lead to a remarkable reduction of the number of pieces of the pump. However, it is very much specific to the intended field of use - i.e. high-end flexible containers holding expensive sterilized pharmaceutical substances and suspended with their outlet orifice at the bottom - and can hardly be adapted to low-cost dispensers for consumer products like e.g. detergents.

The term "fluid" is understood in this text to mean any non-gaseous flowing medium, therefore liquids as well as finely distributed, powdery solid materials.

A well-known example of a conventional dispensing device of the type described above is a sprayer head for a so called trigger sprayer, which is used for instance for detergents.

Such a conventional sprayer head comprises a body that may be fixed, usually screwed onto the neck of a container or bottle and in which a manually operable piston pump is arranged. For operating the pump a trigger is hingedly connected to the body. The suction side of the pump is connected to a tube that extends into the bottle over a substantial length, usually to a position near the bottom, and through which a fluid, typically a liquid may be drawn out of the bottle. The compression side of the pump is connected to a discharge nozzle of the sprayer head through a conduit. A return element, typically a biasing spring is arranged in the pump so as to force the piston back to its position of rest at the end of a pump stroke. The conventional sprayer head is usually screwed onto the bottle in the filling line, after the bottle has been completely filled.

This conventional sprayer head has the drawback of having a relatively high number of parts and being relatively hard to assemble. Thus both manufacture and assembly of the sprayer head are costly and time-consuming, which is especially inconvenient in view of the increasing number of spray bottles being used.

Furthermore, the various parts of conventional sprayer heads are made of different materials, which poses a problem in handling and recycling the spray bottle after it has been discarded.

The invention has for its object to provide an improved dispensing device, which is easy to manufacture and assemble, which has a limited number of parts, which moreover may be made from the same or corresponding materials, and which is suitable for household use. In accordance with the invention, this is accomplished in a dispensing device having the features defined above, in that the neck part of the container is stiff and in that the piston biasing means comprise at least one flexion and/or torsion spring preformed on said neck part

Already fixing a part of the dispensing device beforehand to a neck part of the container achieves that the assembly of the dispensing device in fact coincides with mounting of the dispensing device on the container, whereby in all fewer operations are required. In addition, the remaining part of the dispensing device can take a lighter and simpler form than in conventional dispensing devices, since it will not be used or handled as an independent part and can thus derive its strength and rigidity from the container. The stiff container neck allows easy handling of the container during filling and assembly, while a flexion and/or torsion spring is a structurally simple and effective type of spring.

In order to simplify assembling of the dispensing device and improve its functioning the piston biasing means are advantageously adapted for cooperation with the operating means of the pump. In that manner the piston biasing means need not extend into or be arranged in the pump. Thus the air filled space within the pump occupied by conventional piston biasing springs is suppressed, whereby the pumping action is improved. Furthermore, the choice of materials for the piston biasing means is less critical, as these will not be in contact with the fluid.

An effective biasing action is achieved when the piston biasing means include a plurality of substantially parallel springs that engage the operating means.

In one embodiment of the dispensing device of the invention the springs extend substantially perpendicular to a longitudinal axis of the container, each spring having a closed contour surrounding the pump and being fixed on one end to a column that is attached to said neck part.

In an alternative embodiment of the inventive dispensing device the springs are separately arranged on opposite sides of the pump and extend substantially parallel to a longitudinal axis of the container. An optimum balance between spring force and structural simplicity is then achieved when the springs are combined flexion and torsion springs having a free end that is shaped in a curve.

It is noted that in these case the operating means are preferably connected to the piston such as to be fixed under tension and compression, for instance snapped onto the piston, in order to have it follow all movements of the operating means.

The pump advantageously has a housing to which the operating means are movably connected. An easy to assemble dispensing device is then obtained when the operating means comprise a trigger hingedly snapped onto the pump housing.

In a variant of this embodiment, the pump comprises a work cylinder and a vent cylinder arranged next thereto and the operating means are arranged for displacing the pistons in these cylinders in synchronized fashion. In that case the operating means preferably comprise a pusher member and the or each piston is integrally formed with the pusher member.

In order to prevent or detect unauthorized use of the dispensing device, the device may be provided with blocking means cooperating with the operating means, the blocking means comprising at least one frangible tongue arranged in a path of the operating means. In order to reduce the number of separate pieces, the or each frangible tongue may be connected with the discharge nozzle. In an alternative embodiment, the blocking means may comprise a cover closing off the discharge nozzle.

In order to prevent fluid from being dispensed at too low a pressure, which might lead to insufficient atomizing, the dispensing device may be provided with a precompression system arranged between the pump and the discharge nozzle. In that case, it is preferred that the pump, a part of the precompression system and part of the conduits connecting the pump to the container and/or the discharge nozzle are integrally formed so as to arrive at a maximum reduction of the number of parts while retaining an easy to mold shape. The remaining part of the precompression system is preferably preformed on the neck part of the container.

A very simple assembly is achieved when the remaining part of the dispensing device is connected by means of a snap coupling to the neck part of the container or to the part of the dispensing device preformed thereon. In this manner the connection between both these parts can be brought about quickly and simply in a single movement.

The container and the part of the dispensing device preformed therewith are preferably preformed by means of injection molding. This is a simple and well-known technique, allowing relatively complex shapes to be produced swiftly and at low cost. The container is advantageously blow molded to an end form after the preforming. A preformed container with a part of the dosing device already thereon is thus obtained, which can be stored and transported easily and can moreover be assembled with a small number of operations to form a complete end product.

The invention further relates to an assembly of a neck part of a container and a dispensing device as described above connected thereto. Such an assembly is simple and can be manufactured at low cost, has fewer components than usual and can in addition be relatively light.

The invention also relates to a container for use in an assembly as described above. In accordance with the invention such a container has a neck part that is stiff and biasing means preformed on said neck part, said biasing means comprising at least one flexion and/or torsion spring and being arranged to be connected with a piston of a pump in the remaining part of the dispensing device. This container provides the above discussed advantages in respect of ease of assembly, cost price and the like when compared to conventional containers, which are provided only with provisions for fixing a dispensing device, for instance in the form of screw thread round their neck.

Finally, the invention relates to a method of manufacturing and filling with a fluid a container having a neck part with a dispensing device connected thereto. Such methods are generally known.

In the conventional method the container or bottle is formed at a first location, generally by means of blow molding, and supplied to a filling line. The bottle is herein usually provided with fixing means such as screw thread in the vicinity of the filling opening or neck thereof. The dispensing device, which is constructed from a relatively large number of different components, is assembled at another location and herein also provided with fixing means such as screw thread. This head is then supplied in fully assembled form to the filling line. On the filling line the bottle is filled, whereafter the head is fixed, thus for instance screwed, thereon.

This known method has the drawback that the manufacturing and filling of the container and dispensing device require a relatively large number of operations, which are not geared to each other and cannot be integrated either, whereby the method is therefore time-consuming and expensive. In addition, complete assemblies are already formed at a relatively early stage in the known method which have a relatively high value compared to the end product, which results in the cost of possible rejects at a later stage being relatively high. Finally, once they have been manufactured the empty containers take up a relatively large amount of space during transport and storage before they are filled.

In e.g. US-A-5,337,931, which is directed at a plastic dispensing container having a dispensing valve that is partially integrated in the neck part of the container, it is implicitly disclosed that such a container may be manufactured and filled by first injection moulding the container and its integrated part of the dispensing valve, further forming the remaining part of the dispensing valve, then filling the container and finally assembling the dispensing valve by connecting the remaining part with the part that is integrated in the neck of the container. In that case however, the dispensing device is a simple valve, rather than a pump.

Moreover, from e.g. EP-A-0 372 671 it is known that a container may be manufactured by first injection moulding a test tube like preform, and then blow moulding this preform into the final container form.

The invention now has for its object to provide a method of the described type, wherein said drawbacks do not occur. This is achieved according to the invention with a method which comprises the steps of:
a) simultaneously preforming, by injection moulding, the container, its neck part and a part of the dispensing device that is integral with said neck part, said part of the dispensing device that is integral with said neck part comprising biasing means including at least one flexion and/or torsion spring for connection with a piston of a pump of the dispensing device;
b) forming the remaining part of the dispensing device including the pump and the piston;
c) blow moulding the preformed container into its final form;
d) filling the container with the fluid; and
e) assembling the dispensing device by connecting the remaining part thereof with the part preformed on the neck part, including connecting the biasing means to the piston thus simultaneously closing the container.

By performing in this manner a part of the assembly of the dispensing device only on the filling line, the total number of operations is reduced, which results in an increase in productivity and a decrease in costs. Forming the various parts integrally and simultaneously leads to the number of components being reduced and assembly thus simplified and accelerated. Since the container is preformed by means of injection molding and is blow molded into its final form before filling thereof, the space occupied by the containers prior to filling is reduced, which results in a decrease in the cost of transport and storage.

The container is advantageously manufactured from a resiliently deformable thermoplastic material, for instance PET, so that the components of the dosing head integrated therewith can be embodied robustly while the container can be blow molded simply.

A method which is quick and easy to perform is obtained when the remaining part of the dispensing device is connected by means of a snap coupling to the neck part of the container or the part of the dispensing device preformed thereon, since both parts can then be mutually connected in a single movement.

The container is preferably filled in suspended position. In contrast to the conventional method of filling, wherein the containers are transported and filled in standing position, a machine used for filling does not hereby have to be adapted when containers with a different volume and thus a different height have to be processed.

In a further preferred embodiment, the remaining part of the dispensing device includes a pump having a displacement element that is moveable between first and second positions, the displaceable element being moved to its second position before the container is closed and being moved to its first position after the container is closed, such as to draw fluid into the pump. The dispenser, formed by the container with its dispensing device is then ready for use.

The invention will now be elucidated on the basis of a number of embodiments, wherein reference is made to the annexed drawing, in which:

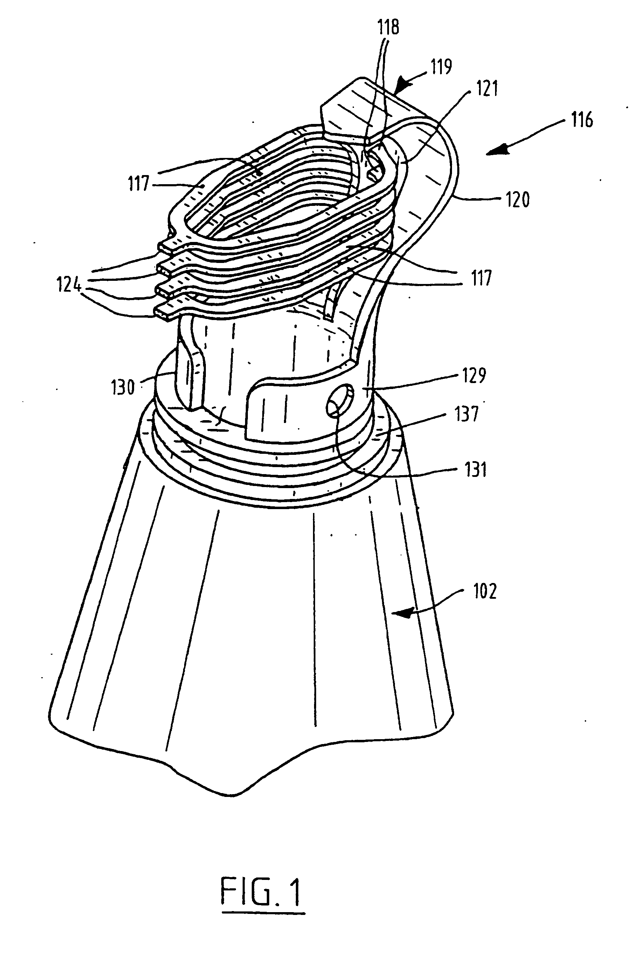

Figure 1 is a perspective detailed view of the neck of a container and biasing means integrated therewith according to a first embodiment of the invention,
Figure 2 is a side elevation of the container of Figure 1 and part of a sprayer head connected therewith,

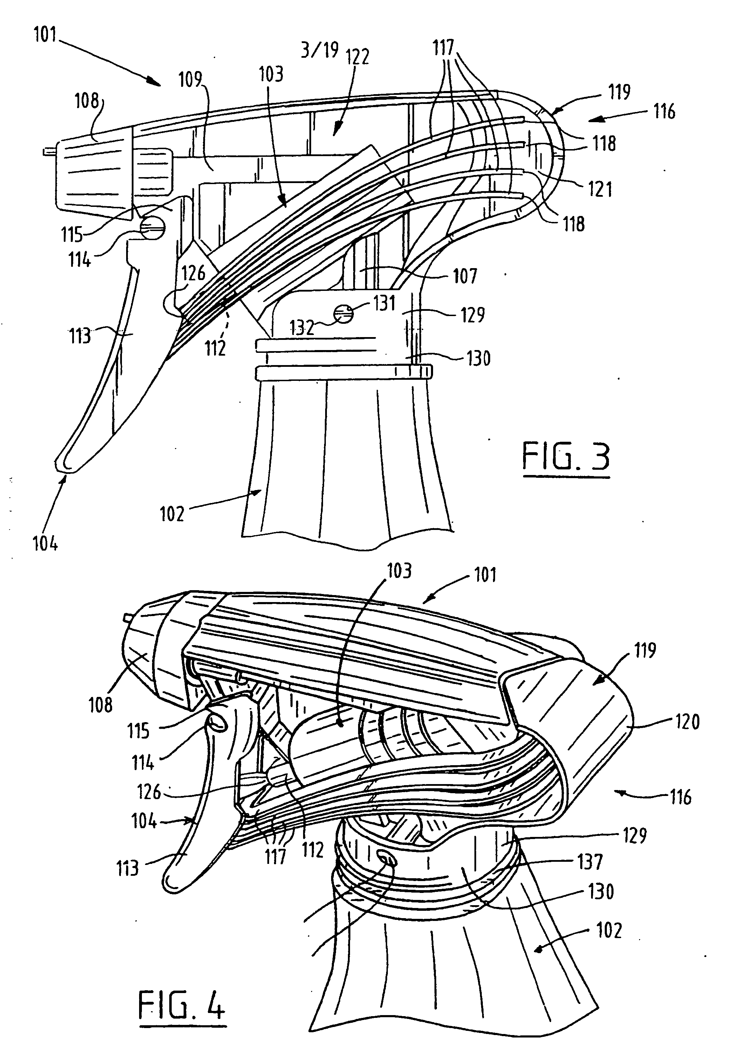

Figure 3 is a view corresponding to Figure 2 of the container and sprayer head in assembled state,
Figure 4 is perspective view of the assembly of Figure 2,

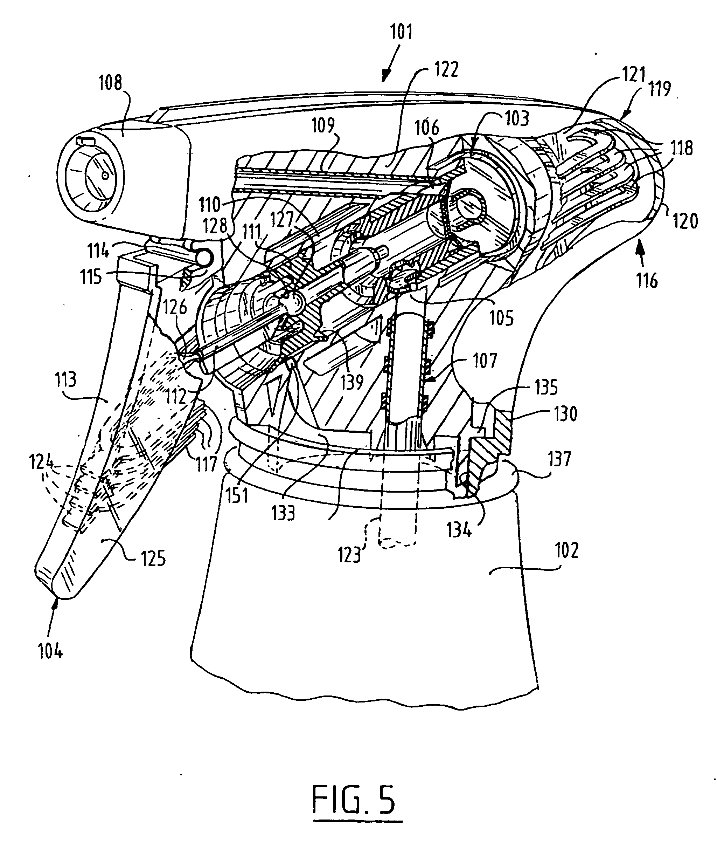

Figure 5 is a view corresponding to that of Figure 4, but partly in section,
Figure 6 is a perspective view of an assembly of a container and a sprayer head in accordance with a preferred embodiment of the invention,

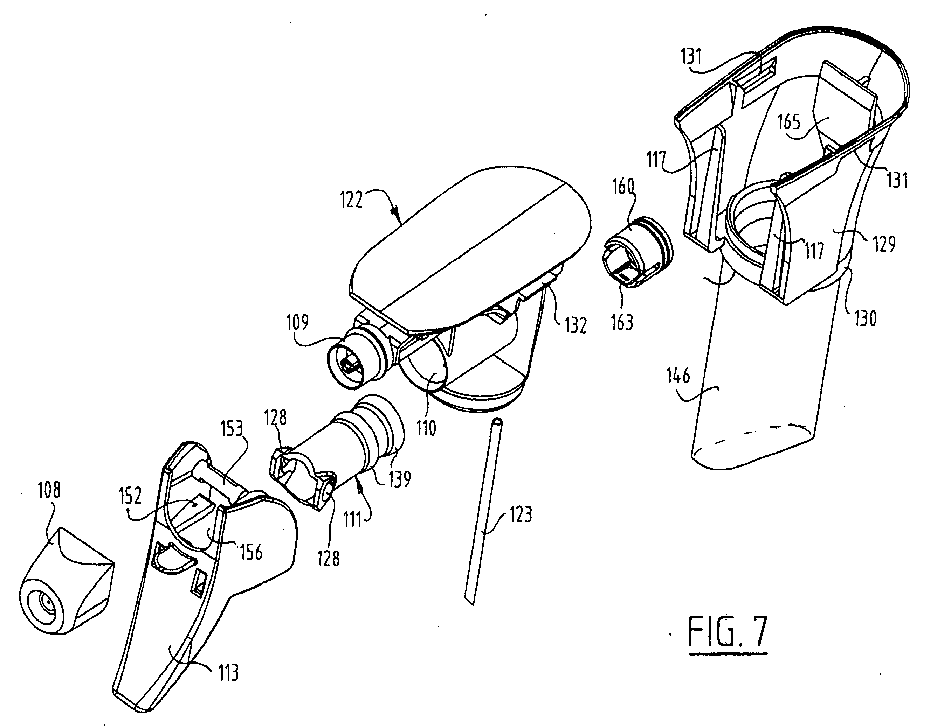

Figure 7 is a perspective exploded view of the sprayer head of Figure 6,

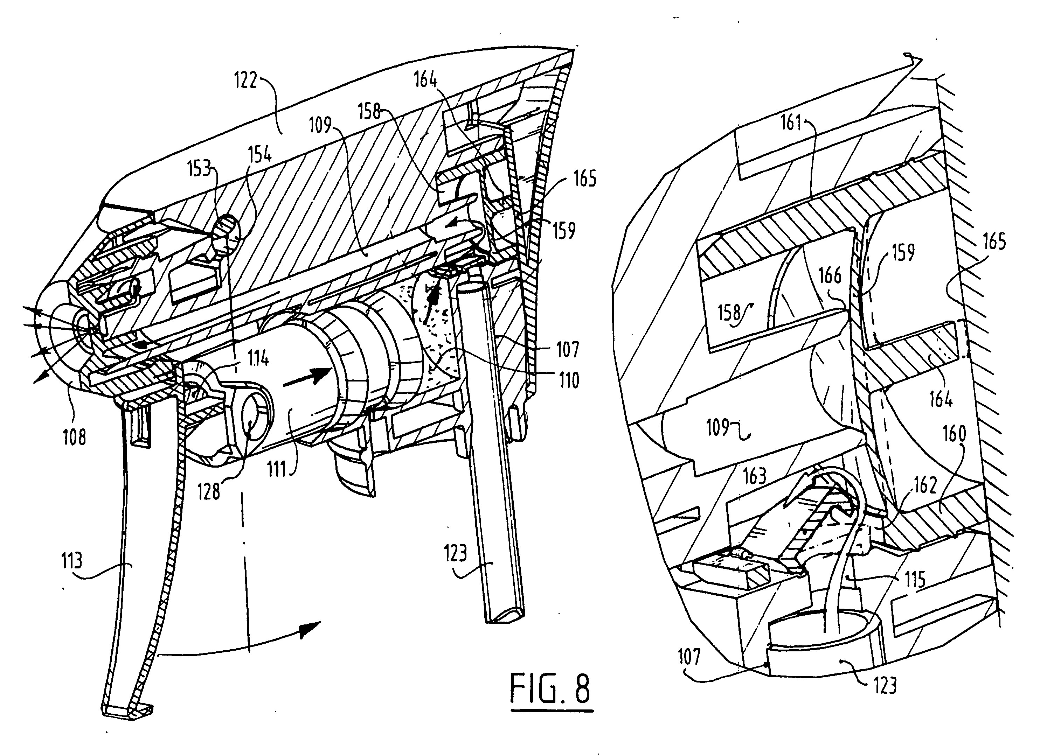

Figure 8 is a view, partly in section of the sprayer head of Figure 7 in assembled state during a pump stroke,
Figure 9 is a view corresponding with Figure 8 of the sprayer head during the return stroke,
Figure 10 is a perspective view of an alternative embodiment of the biasing means of the sprayer head,
Figure 11 is a schematic representation of the various steps of the method in accordance with the invention,
Figure 12 is an exploded perspective view of a container having a dispensing device in accordance with an alternative embodiment of the invention,

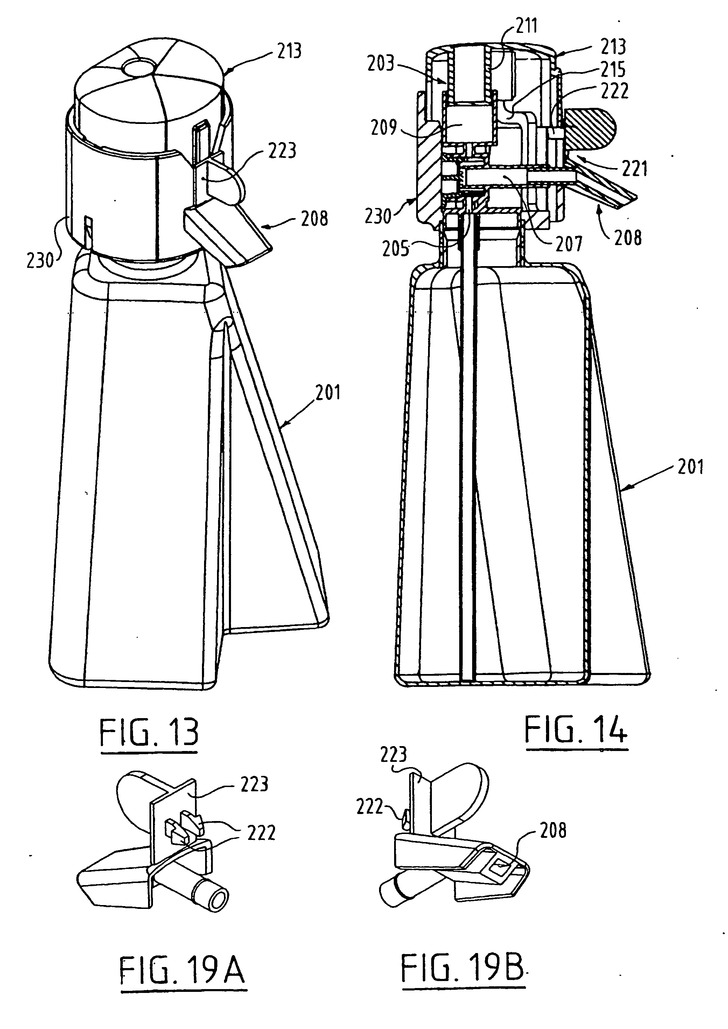

Figure 13 is a perspective view of the container and dispensing device of Figure 12 in assembled state,
Figure 14 is a longitudinal sectional view of the container and dispensing device of Figures 12 and 13,
Figure 15 is an enlarged scale detailed view of the dispensing device of Figure 14,
Figure 16 is a view corresponding to Figure 15 of an alternative embodiment of the dispensing device,

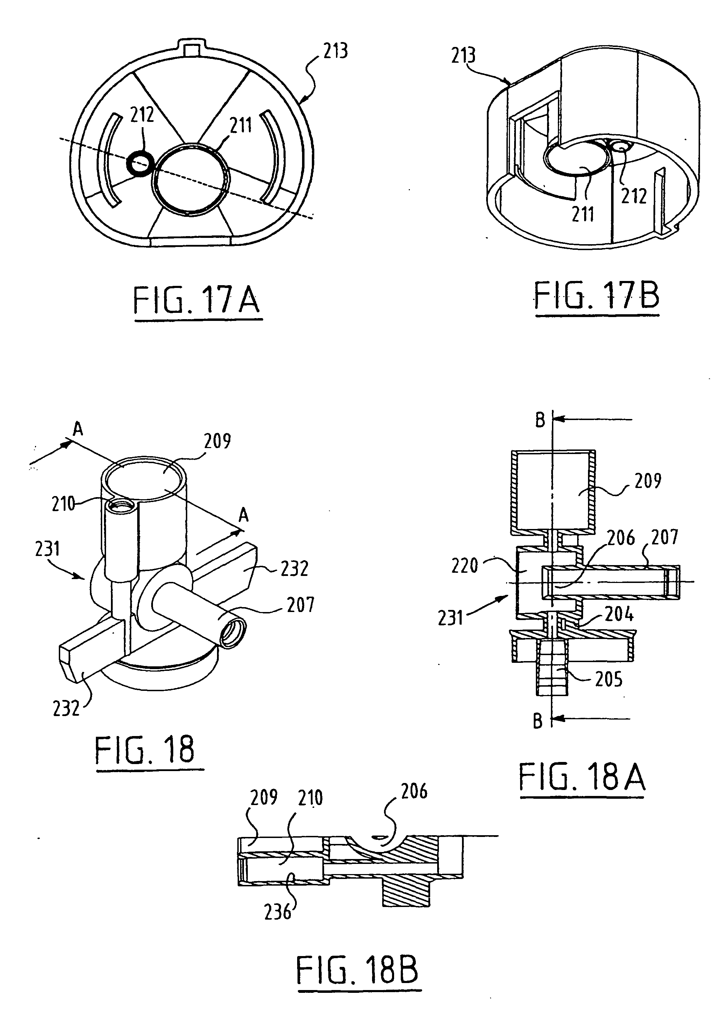

Figure 17A and 17B show an elevational and a perspective bottom view, respectively, of the operating member of the dispensing device,
Figure 18, 18A and 18B show a perspective view and sectional views along the lines A-A and B-B, respectively, of the two cylinder pump of the dispensing device,

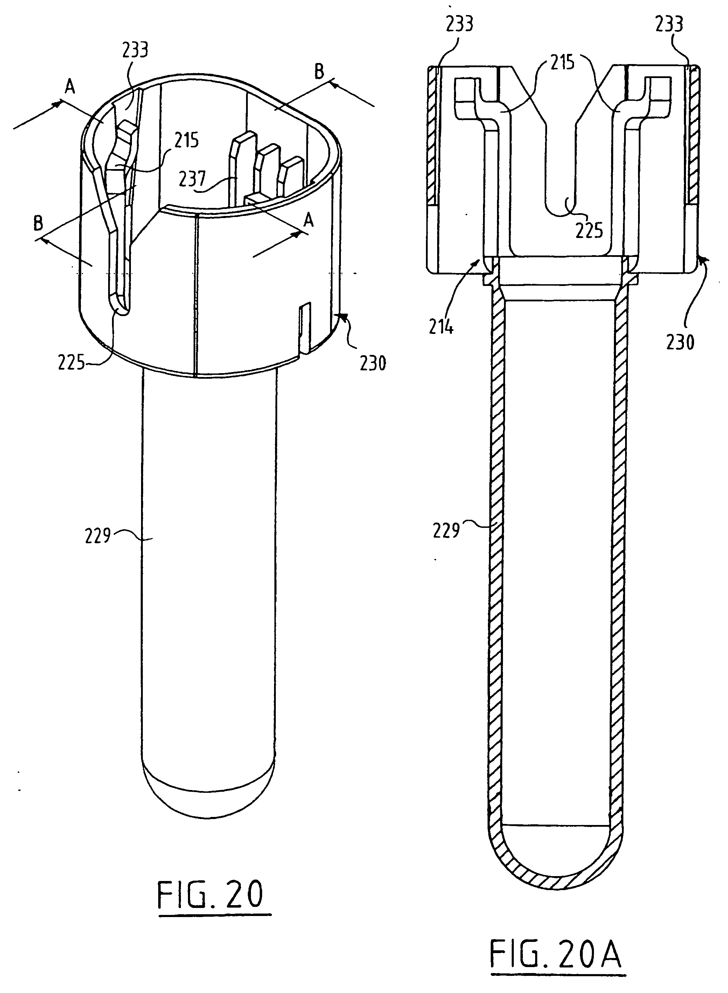

Figure 19A and 19B are perspective views of a separate discharge nozzle having blocking means integrated therein,
Figure 20, 20A and 20B show a perspective view and sectional views along the lines A-A and B-B, respectively, of the preformed container including return means of the dispensing device,
Figure 21 is a view corresponding with Figure 12 of yet another embodiment of the dispensing device,
Figure 22A and 22B show a longitudinal sectional view and a front view, respectively, of the discharge nozzle used in that dispensing device,
Figure 23 is a perspective bottom view of the operating member including blocking means of this dispensing device,
Figure 24 is a perspective view of the preformed container of yet another embodiment of the invention,

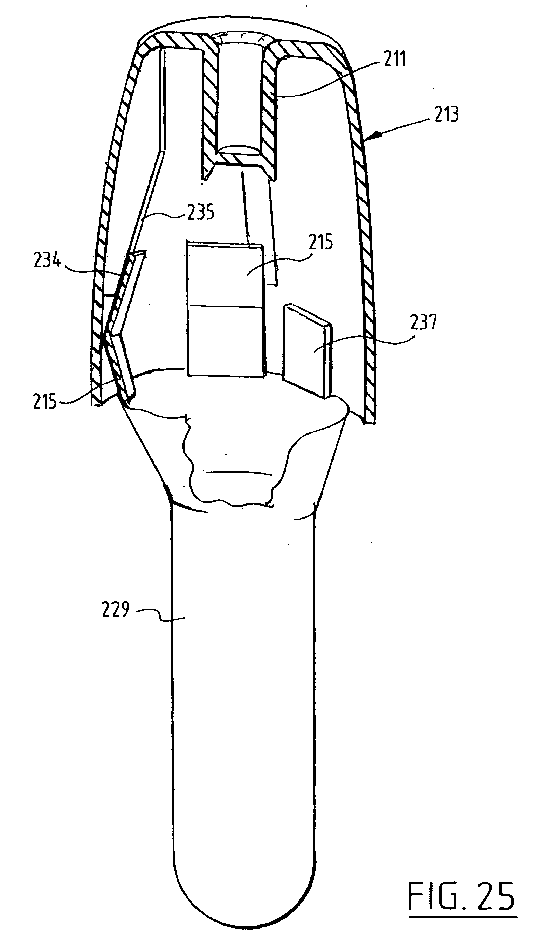

Figure 25 is a perspective sectional view of the container preform of Figure 24 and an operating member or cap that forms part of the dispensing device,

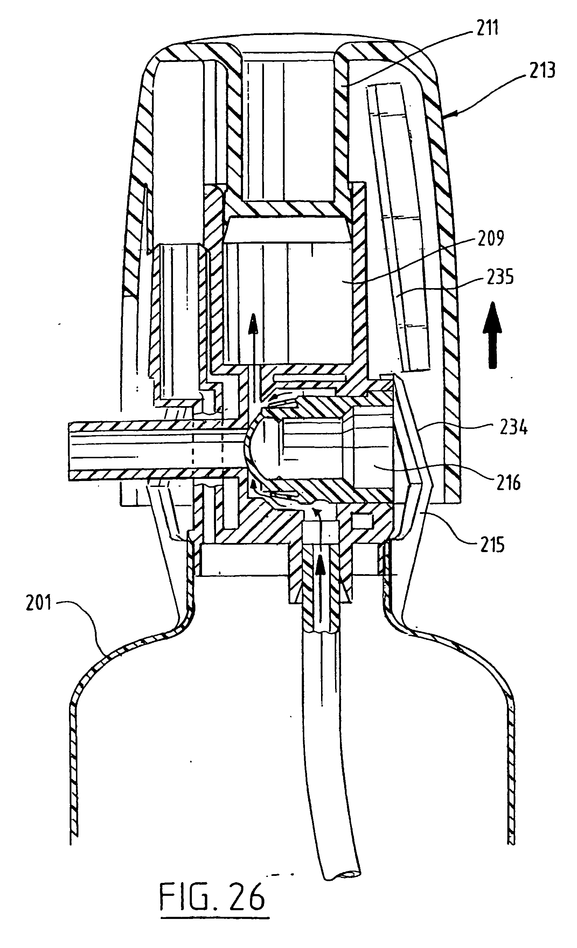

Figure 26 is a partial sectional view of the dispensing device and neck of the container in assembled state at the beginning of an inward stroke, and

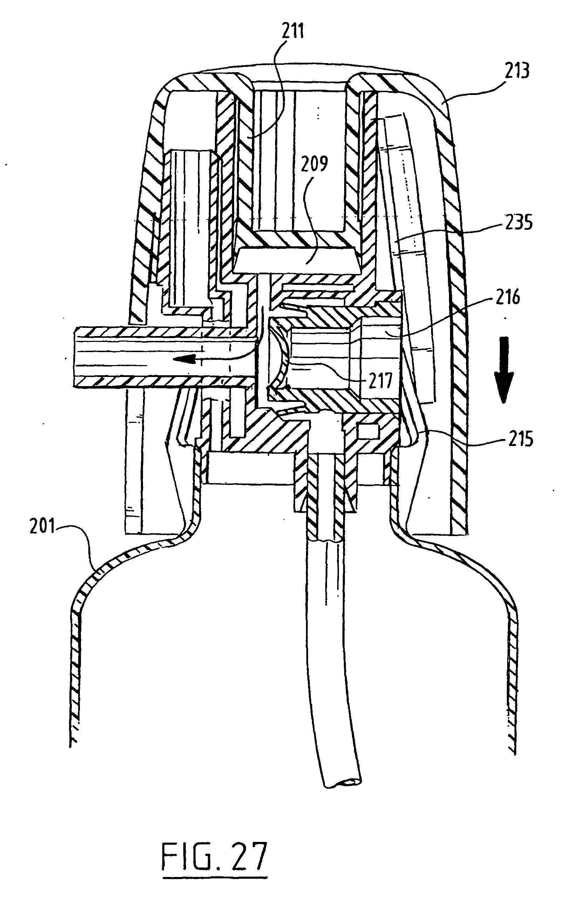

Figure 27 is a view corresponding to Figure 26 at the end of the inward stroke.

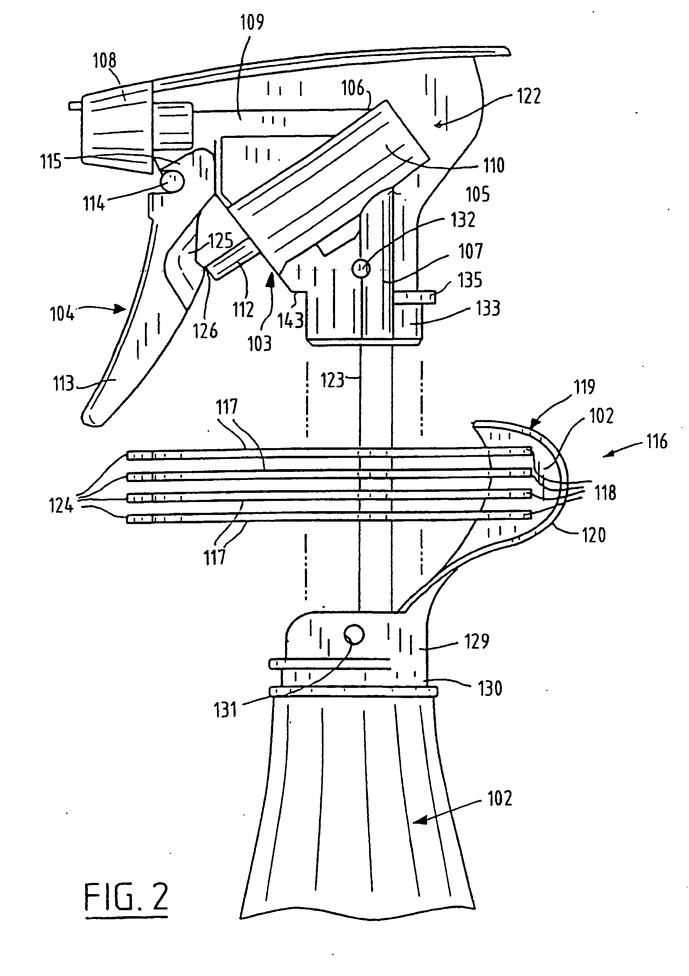

In a first embodiment the dispensing device is a sprayer head 101 for a container 102 (Figure 2) comprising a pump 103 having a suction side 105 and a compression side 106. Movable operating means 104 are connected to the pump 103, in the illustrated example constituted by a trigger 113 having a hook part 115 snapped around a pivot shaft 114. Means 107 are connected to the suction side 105 of the pump 103 for supplying a fluid from the container, comprised of a conduit having its free end connected to a tube 123 extending into the container. The compression side 106 of the pump 103 is connected to a discharge nozzle 108 through a conduit 109. In the illustrated embodiment pump 103, operating means 104 and discharge nozzle 108 are arranged in a frame 122, which can be fixed to the container 102 in a way to be discussed below.

Pump 103 is a piston pump, constituted by a pump housing or cylinder 110 and a piston 111 reciprocating therein. The piston 111 is connected to a piston rod 112 which in turn is connected to the trigger 113. In order to return the piston 111 and trigger 113 to their extended position of rest at the end of a pump stroke, the sprayer head 101 comprises biasing means 116.

In the illustrated embodiment the biasing means are constituted by a plurality of parallel flexion springs 117 that engage the trigger 113. When the trigger 113 is pivoted around the pivot shaft 114 towards the pump 103 and presses the piston 111 into the cylinder 110 during a pump stroke, the springs 117 are bent. When the pressure on the trigger 113 is released it is forced back to its position of rest by the springs 117 flexing back. Since the trigger is connected to the piston 111 such as to remain fixed under both tension and compression, the piston 111 is then also pulled back to its position of rest. The connection between the trigger 113 and the piston 111 is formed by the piston rod 112, which is snapped onto the piston 111 and is connected to the trigger 113 by means of a film hinge. The snap connection between the piston rod 112 and the piston 111 is formed by a head 127 of the piston rod 112 being snapped into a corresponding opening 128 in the piston 111.

The springs 117 each have a closed contour and are fixed on one end 118 to a column or "spine" 119 whereas the opposite side of each spring 117 has a protrusion 124 engaging in a cavity 125 in the trigger 113. The column 119 which consists of a curved web 120 and a reinforcing rib arranged therein, has a partly cylindrical basis 129 which is attached to the neck 130 of the container 102. The basis 129, the column 119 and the springs 117 are integrally molded with the container 102. In the basis 129 two opposite openings 131 are arranged which cooperate with two protruding snap members 132 on the frame 122 carrying the pump 103, the operating means 104 and the discharge nozzle 108. This frame 122 further comprises a cylindrical lower part or skirt 133 which may be close fittingly received in the neck 130 of the container 102 an there constitutes a gas-and liquid tight seal with the inner edge 134 of that neck. The frame 122 further comprises an edge 135 and a shoulder 143 which in the assembled state of the sprayer head 101 come to rest on the upper edge 136 of the neck 130.

Since part of the sprayer head 101, in the shown embodiment the biassing means 116 form part of the container 102, assembling the sprayer head 101 finally takes place on the moment that the container 102 is filled and subsequently closed by placing the frame 122 carrying the various parts of the sprayer head 101. Since part of the operations relating to assembly of the sprayer head 101 are in fact integrated with the final assembly which are also necessary, the total number of operations to be performed for forming the container with the sprayer head is substantially lower than with conventional, completely pre-assembled sprayer heads.

Furthermore, the number of sperate parts is substantially reduced in comparison to a conventional sprayer head, since certain parts are integrated in the container.

For assembling the remaining parts of the sprayer head the flexion springs 117 must be introduced into the cavity 125 of the trigger 113. To this end the piston 111 must be moved to its outer position. Then the remaining part of the sprayer head 101 may be pressed into the neck of the container 102 and fixed therein by means of the snap members 132 engaging in the openings 131.

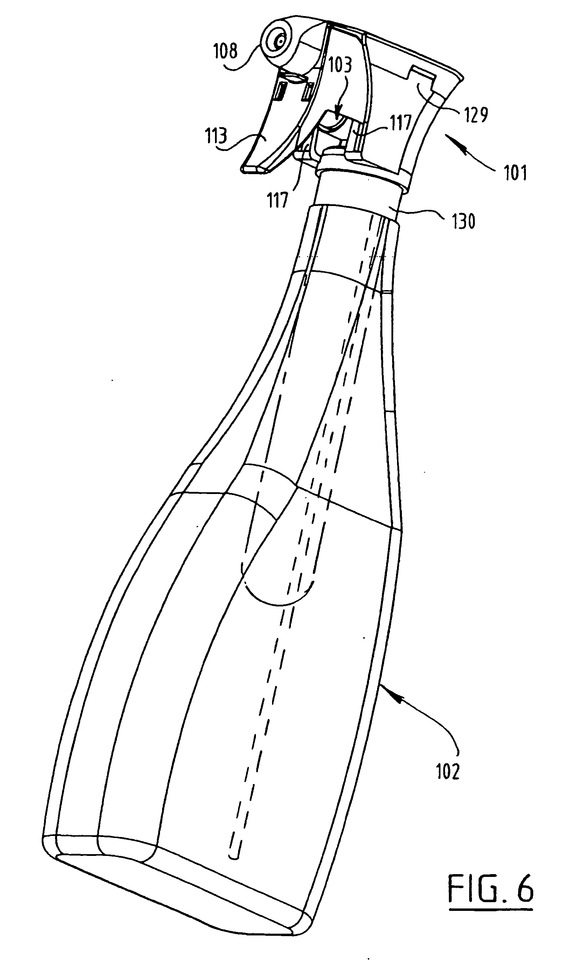

In another embodiment of the assembly of sprayer head 101 and container 102, which is the preferred embodiment at the moment (Figure 6), the biasing means 116 take the shape of separate flexion springs 117 extending substantially parallel to the longitudinal of axis of the container 102, instead of perpendicular thereto as in the first embodiment. These flexion springs 117 cooperate with ribs 152 arranged in the cavity 125 of the trigger 113. In this embodiment the trigger 113 has a continuous pivot shaft 153 that is received in a hollow space 154 in the frame 122 and that is locked therein by a flexible snap arm 155. As the shaft 153 of the trigger 113 and the receiving space 154 are located above the spraying conduit 109, an aperture 156 is arranged in the trigger 113, through which extends the end of this conduit 109, onto which is arranged the discharge nozzle 108. The trigger further comprises protruding cams (not shown here) which directly engage in openings 128 of the piston 111. This embodiment therefore has no separate piston rod.

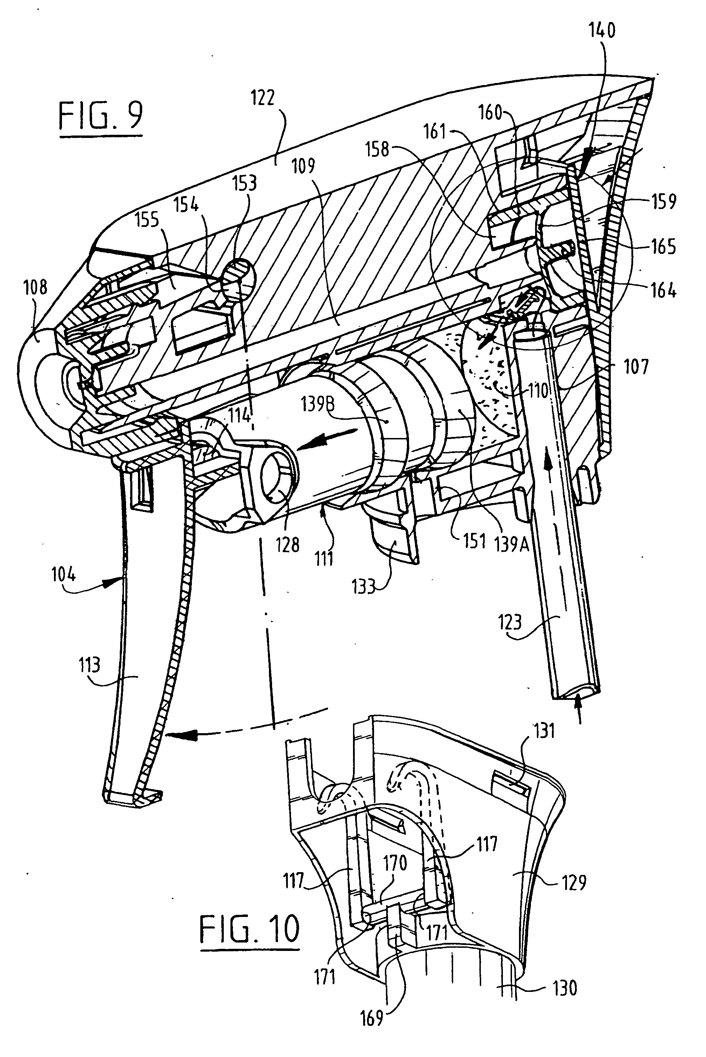

On the other hand it is also possible, for instance when the container 102 and the springs 117 are made of a material that is less flexible, to use combined flexion and torsion springs that are deformable in various directions instead of the flexion springs 117 as shown (Figure 10). Such combined flexion and torsion springs 117 comprise in the shown embodiment a bracket 169 connected to the container 102 and a torsion spring 170 arranged perpendicular thereto, which extends in two directions. The actual flexion springs 117 are attached to the free ends 171 of the torsion spring 170 and have a curved shape in themselves, for instance an inverted Ushape. In this way the springs 117 may also be molded integrally with the container 102 when this is made of a less flexible material.

Furthermore, in this embodiment a precompression system is shown to be arranged between the cylinder 110 and the spraying conduit 109 comprising an annular space 158 connected to the cylinder 110 and closed off in a gas-and liquid-tight manner by a resiliently flexible diaphragm 159. The space 158 is bordered by a cylindrical sleeve 160 that is received in a cavity 161 in the frame 122 and that is integrally formed with the diaphragm 159 in the illustrated embodiment. In this cylindrical sleeve 160 an opening 162 is formed, in which is arranged a movable valve 163, and which is connected to the suction conduit 107 for the fluid through an opening 167 in the frame 122. In the shown embodiment this valve 163, which may hermetically seal the opening 167, is also integrally formed with the sleeve 160. Further a stop member 164 is connected to the diaphragm 159, which serves to limit bending of the diaphragm 159. The cylindrical sleeve 160 is locked in the cavity 161 of the frame 122 by an end wall which is integrally molded with the container 102.

The precompression system 140 serves in known manner to inhibit transport of fluid from the container 102 to the discharge nozzle as long as a predetermined pump pressure is not yet attained. If a fluid is sprayed through the nozzle 108 at too low a pressure, this fluid is insufficiently atomized and drops generated in the spray cone are too large. In order to prevent this from occurring the connection between the container 102 and the discharge nozzle 108 is closed off by the diaphragm 159 which is forcibly pressed against the rim 166 of the spraying conduit 109 serving as a seat due to the internal stress determined by the domed configuration and assisted by the ambient pressure behind the diaphragm 159. Only when sufficient pressure, for instance on the order of 3 bar, is built up in the cylinder 110 by moving the piston 111 to its end position will the diaphragm 159 be lifted from the seat 166.

The sprayer head 101 thus functions as follows. When a user wishes to atomize the fluid from the container 102, he first pulls the trigger 113. In this way air that is present in the cylinder 110 and that cannot flow back to the container 102 due to the opening 167 being shut off by the valve 163 is compressed by the piston 111. When the pressure of the air is high enough at the end of the pump stroke the diaphragm 159 is lifted from the seat 166 and the air may escape.

During the subsequent return stroke forced by the biasing means 116 fluid is drawn from the container 102 through tube 123, conduit 107 and openings 162 and 167 into the cylinder 110 until this is completely filled at the end of the return or suction stroke (Figure 9).

In order to prevent a partial vacuum from being developed in the container 102 during this stroke an aeration hole 151 is formed in the wall of the cylinder 110, which is opened when an outer peripheral sealing lip 139B passes the opening 151 during inward movement of the piston 111 and which is again connected to a closed space defined between the outer and inner peripheral sealing lips 139B and 139A of the piston 111 during the outward stroke of the piston 111.

The sprayer head 101 in accordance with this embodiment of the invention is assembled by inserting the annular sleeve 160 and the suction tube 123 into the injection molded frame 122. Then the piston 111 is slid into the cylinder 110 and the trigger 113 is snapped with its pivot shaft 153 into the hollow 154 of the frame 122. After that the trigger 113 and the piston 111 are snapped together, after which finally the discharge nozzle 108 may be attached to the end of the spraying conduit 109. The assembly thus formed may then simply be introduced into the neck of the container 102 until the snap member 132 of the frame 122 snap into the openings 131 in the cheeks 129 above the neck 130 of the container 102. This embodiment is thus easier to assemble than the first embodiment.

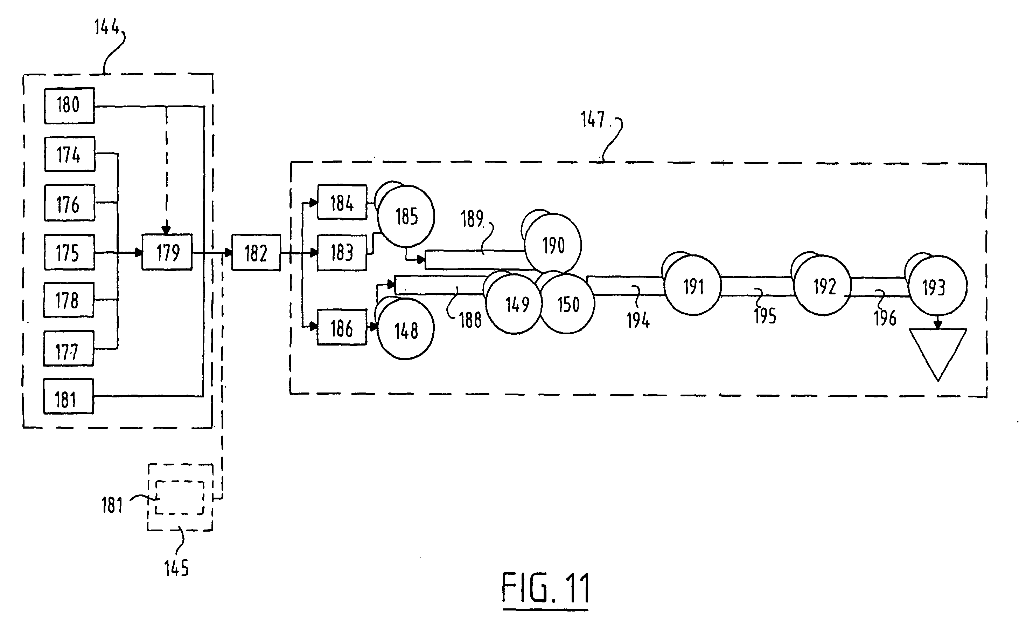

The total path of forming, assembling and filling the container 102 and the sprayer head 101 is thus as follows. At a first location 144 the frame 122 carrying the cylinder 110 of the pump 103, the suction conduit 107 and the spraying conduit 109 is injection molded (Figure 11, block 174). Also the trigger 113 (block 175), piston 111 (block 176), sleeve 160 (block 177) and discharge nozzle 108 (block 178) are formed by any suitable technique, for instance injection molding. All these parts are assembled in block 179. If so desired also the suction tube 123 may already be mounted (block 180).

At the same location or a different location the container 102 is preformed (block 181), as well as the part of the sprayer head integrated therewith, in the embodiment illustrated above the biasing means 116. The various parts are then transported (block 182) to a different location, where the filling and final assembly operations are performed.

The part of the sprayer head that has already been assembled (block 183) is provided with a suction tube 123 supplied from a block 184 at a station 185, unless of course this had already been done previously. Then the thus formed subassembly is supplied to a positioning station 189 via a buffer 187. The test-tube like preform 146 with integrated biasing means 116 is supplied to a filling line from a block 186. At a first station 148 of this filling line the preform 146 is heated and then inflated to form a container 102 with the desired final shape. For this purpose preform 146 has a handling edge on which it can be picked up and clamped. This is therefore a two-stage process for blow molding of container 102. It is however also possible to form the container in a one-stage process, wherein in one and the same machine preform 146 is injection molded and, while still warm, inflated to its final form.

After progressing through a buffer 188 the thus formed container 102 is then filled in a subsequent station 149 with a fluid, generally a liquid, for instance a liquid cleaning product or the like. The presence of the handling edge is an advantage herein, since container 102 can be suspended therefrom in the filling machine. In contrast to conventional filling stations, in which container 102 is transported in standing position, this filling station 149 does not therefore have to be adapted when containers of a different volume, and thus a different height, have to be processed.

Finally, in a following station 150 the filled container 102 is closed by arranging thereon the remaining part of dispensing device, i.e. the sprayer head subassembly. The thus formed assembly then progresses further through the usual steps of labelling (block 191), packing into boxes (block 192) and palletizing and shrink-wrapping (block 193), wherein the usual buffers 194, 195 and 196 are present between these steps.

However, it is also possible to "prime" the dispenser, by filling the pump with some liquid drawn from the container. To this end the piston of the pump is pushed inward before assembly of the dispensing device and the container, and is then pulled outward during or after assembly, thus drawing liquid from the container into the pump. The dispenser is then ready for use.

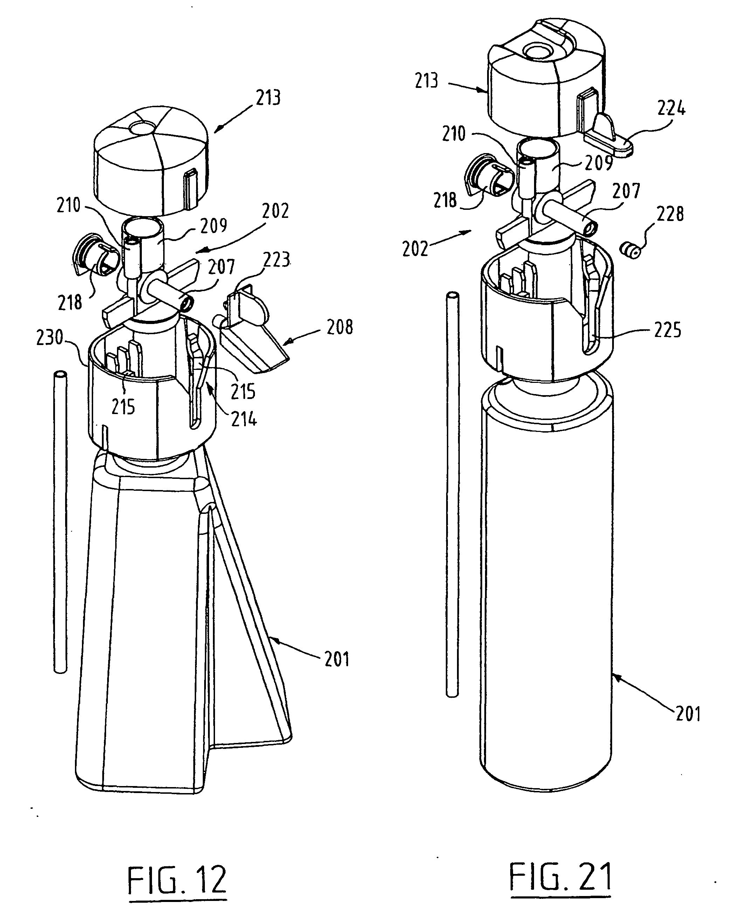

A device 202 for metered dispensing of a liquid or gel from a container 201 in accordance with yet another embodiment of the invention (Figure 12) comprises a pump 203, a suction side 204 of which is connected to the container 201 through a suction conduit 205, whereas the pressure side 206 thereof is connected to a stationary discharge nozzle 208 through a pressure conduit 207. In the illustrated embodiment the dispensing device 202 is meant for a gel like hand soap and the discharge nozzle 208 takes the form of an outflow tube.

The pump 203 comprises two cylinders arranged next to each other, a work cylinder 209 and a vent cylinder 210. In each of the cylinders 209,210 a piston 211,212 is displaceably arranged. The vent cylinder 210 includes a ridge 236 for deforming the piston 212 at the end of its stroke, thus creating a venting gap. Both pistons are operated by operating means 213, in this case in the shape of an upwardly and downwardly moveable pusher member. In this embodiment both pistons are rigidly connected to, and even integrally formed with the operating member 213.

The operating member 213 is moveable in upward and downward direction between a position of rest and a pumping position. From this pumping position the pusher member is returned to its position of rest when the pressure is released therefrom by return means 214, which in this embodiment are also formed by two combined flexion and torsion springs 215 that are integrally formed with the container 201.

Between the pump 203 and the discharge nozzle 208 a precompression system 216 is also arranged. This precompression system again comprises a diaphragm 217 which forms part of a sleeve 218 arranged in a chamber 220, in which is also arranged a moveable shut-off valve 219. The sleeve 218 is fixed in the chamber 220 by a retainer 237 forming part of a cup-shaped part 230 that is integrally formed with the container 201.

The pump 203, the chamber 220 of the precompression system and part of the suction and pressure lines 205, 207 are formed as a single injection molded piece 231, that is received in the cup-shaped part 230. To this end the piece 231 has two mounting wings 232 which are received in slots 233 arranged in the cup shaped part 230. In this way, the number of separate parts is reduced and the assembly is simplified. Also problems in respect of possible leakage are hereby minimized.

The dispensing device 202 further comprises blocking means 221 by which unauthorized use of device 202 may be prevented or at least rendered detectable after the act. In a first embodiment of the device 202 these blocking means are constituted by two frangible tongues 222 that are arranged in the path of the operating member 213 and that are integrally formed with the discharge nozzle 208. The tongues are arranged on an gripping part 223 that may be manipulated by a user so as to bring it out of the path of the operating member and tearing it off, whereby the pusher member 213 may be pressed down and the pump 203 may be operated. As the tongues 222 have to be torn off before use, any (possibly unauthorized) use will always be immediately detectable.

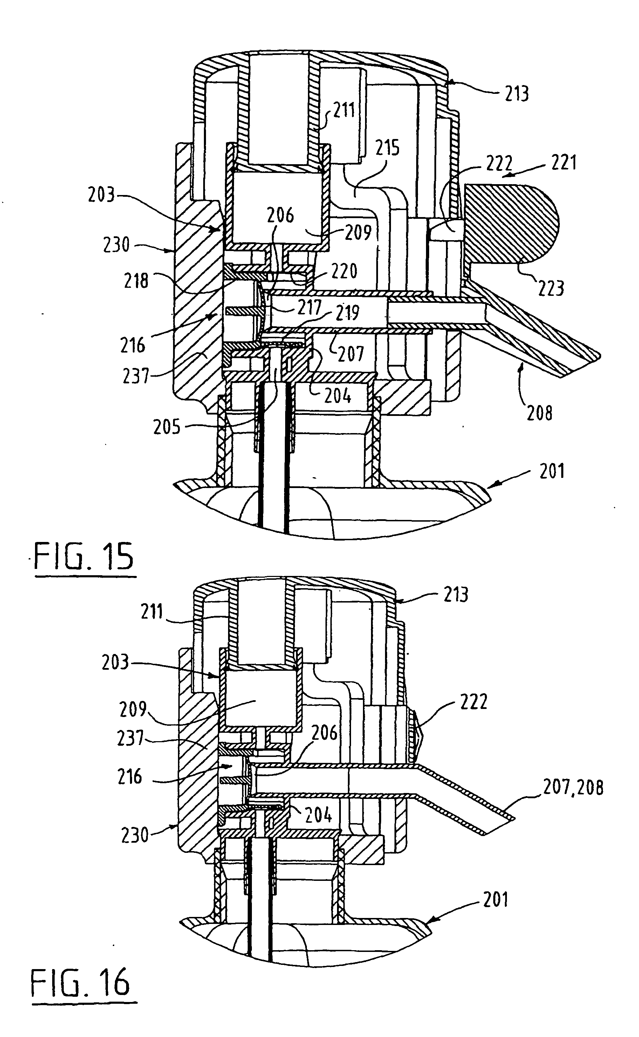

It is also possible to integrate the blocking means 221 or frangible tongues 222 with the operating member 213 (Figure 16). In that case the discharge nozzle 208 may be integrally formed with the pressure conduit 207 and the number of parts may be further reduced.

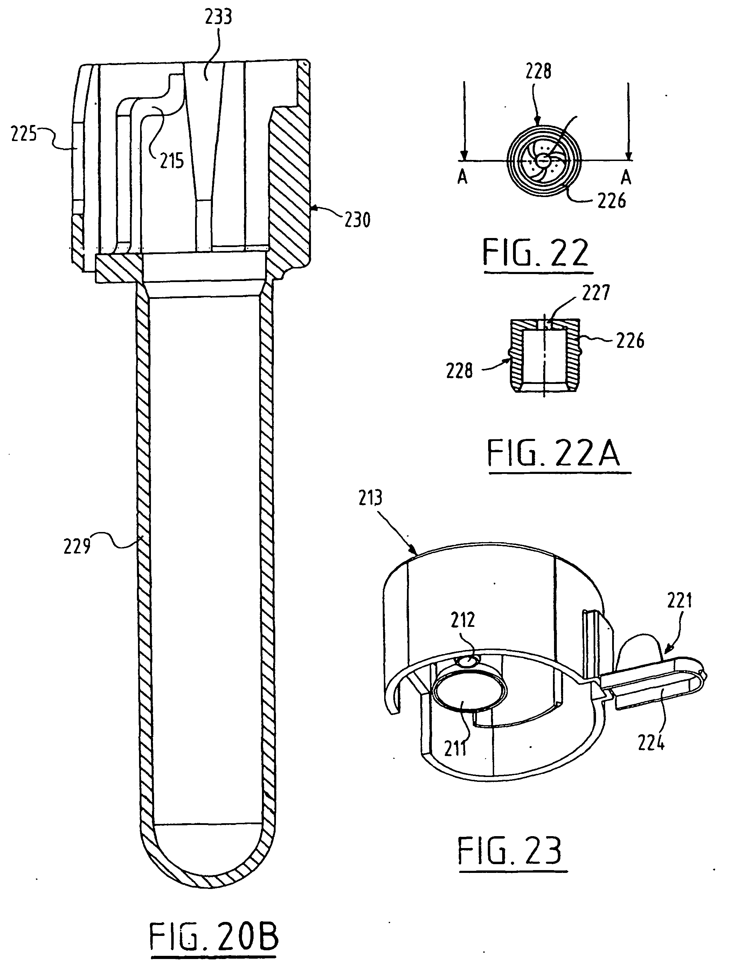

In yet another embodiment (Figure 21) the blocking means 221 are formed by a cover 224 that is hingedly connected to the pusher member 213 (Figure 23) and that closes off the discharge nozzle and comes to lie in a correspondingly shaped recess 225, so that the pusher member 213 is latched against further movement. This embodiment may very well be combined with a discharge nozzle 228 that is embodied as a spraying or atomizing element (Figure 22) and that is formed by a cylindrical sleeve 226 having a very small metering orifice 227.

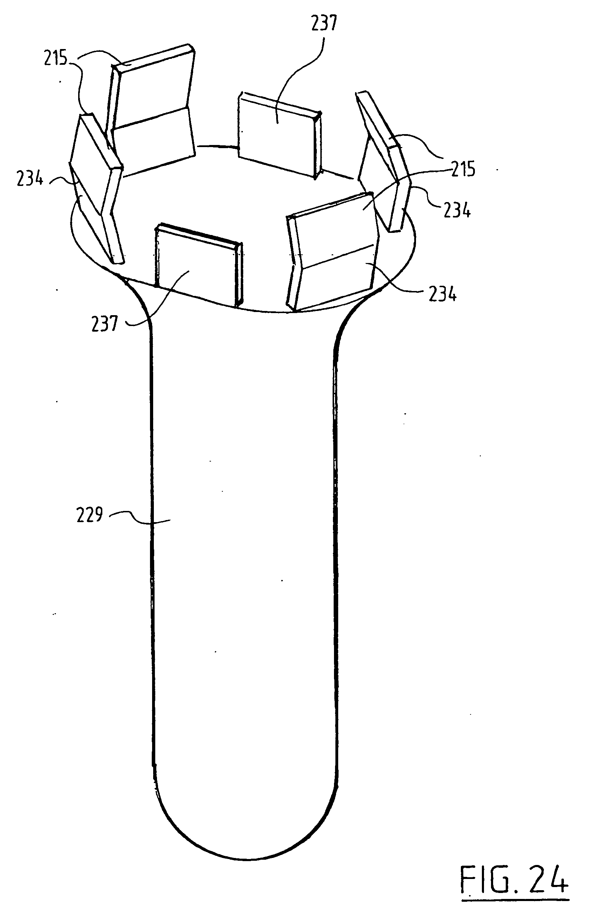

In yet another embodiment (Figure 24), the return means 214 comprise four flexion springs 215 having inwardly inclined engagement surfaces 234. The pusher member 213 of this embodiment has corresponding inclined surfaces 235 cooperating with the springs 215. When the pusher member 213 is pushed down during an inward compression stroke the springs 215 are bent inward by the inclined surfaces 235 traveling downwards. When the pusher member 213 is released the springs 215 flex back, causing the pusher member 213 and thus the piston 211 to travel upwards again. The other parts of this embodiment correspond with those of the previous embodiment, and are not described here in further detail.

Although the invention has been described above with reference to a number of possible embodiments thereof, the skilled person will appreciate that many modifications could be made thereto. In particular, the novel and inventive features of the dispensers that are not directly related to the integration of part of the dispensing device with the container could be applied with equal effect to conventional, separately produced dispensers. The scope of the invention is therefore defined solely by the appended claims.

## Claims

1. Dispensing device (101; 202) to be connected to a container (102; 201) for dosed dispensing of a fluid, at least a part of the dispensing device (101; 202) being preformed on a neck part (130) of the container (102; 201) and the remaining part of the dispensing device (101; 202) being connected thereto, said dispensing device (101; 202) comprising:
- at least one opening and at least one closing member co-acting with the opening and movable between a position closing the opening and a position leaving clear the opening;
- at least one pump (103; 203) arranged between the container (102; 201) and the opening, the pump (103; 203) having a suction side (105; 205) and a compression side (105; 206) and including a cylinder (110; 209, 210) integrated in the remaining part of the dispensing device (101; 202) and a piston (111; 211, 212) reciprocating therein;
- moveable operating means (104; 213) connected to the piston (111; 211, 212) for operating thereof;
- biasing means (116; 214) preformed on the neck part (130) of the container (102; 201) connected with the piston (111; 211, 212) for biasing it to a position of rest;
- means (107; 205) connected to the suction side (105; 205) of the pump (103; 203) for supplying fluid from the container (102; 201); and
- at least one discharge nozzle (108; 208) connected to the compression side (106; 206) of the pump (103; 203);
**characterized in that**:
- the neck part (130) of the container (102; 201) is stiff; and
- the piston biasing means (116; 214) comprise at least one flexion and/or torsion spring (117; 215) preformed on said neck part (130).

2. Dispensing device (101; 202) as claimed in claim 1, **characterized in that** the piston biasing means (116; 214) are arranged for cooperation with the operating means (104; 213) of the pump (103; 203).

3. Dispensing device (101; 202) as claimed in claim 2, **characterized in that** the piston biasing means (116; 214) include a plurality of substantially parallel springs (117; 215) that engage the operating means (104; 213).

4. Dispensing device (101) as claimed in claim 3, **characterized in that** the springs (117) extend substantially perpendicular to a longitudinal axis of the container (102), each spring (117) having a closed contour surrounding the pump (103) and being fixed on one end (118) to a column (119) that is attached to said neck part (130).

5. Dispensing device (101; 202) as claimed in claim 3, **characterized in that** the springs (117; 215) are separately arranged on opposite sides of the pump (103; 203) and extend substantially parallel to a longitudinal axis of the container (102; 201).

6. Dispensing device (101; 202) as claimed in claim 5, **characterized in that** the springs (117; 215) are combined flexion and torsion springs having a free end that is shaped in a curve.

7. Dispensing device (101; 202) as claimed in any of claims 2 to 6, **characterized in that** the operating means (104; 213) are connected to the piston (111; 211, 212) such as to be fixed under tension and compression.

8. Dispensing device (101; 202) as claimed in claim 7, **characterized in that** the operating means (104; 213) are snapped onto the piston (111; 211, 212).

9. Dispensing device (101; 202) as claimed in any one of the claims 1 to 8, **characterized in that** the pump (103; 203) has a housing to which the operating means (104; 213) are movably connected.

10. Dispensing device (101) as claimed in claim 9, **characterized in that** the operating means (104) comprise a trigger (113) hingedly snapped onto the pump housing.

11. Dispensing device (202) as claimed in any of the claims 1 to 10, **characterized in that** the pump (203) comprises a work cylinder (209) and a vent cylinder (210) arranged next thereto, and **in that** the operating means (213) are arranged for displacing the pistons (211, 212) in these cylinders (209, 210) in synchronized fashion.

12. Dispensing device (202) as claimed in claim 11, **characterized in that** the operating means (213) comprise a pusher member and the or each piston (211, 212) is integrally formed with the pusher member.

13. Dispensing device (202) as claimed in claim 11 or 12, **characterized by** means (236) arranged in the vent cylinder (210) for deforming the piston (212) that is displaceable therein.

14. Dispensing device (202) as claimed in any of the claims 1 to 13, **characterized by** blocking means (221) cooperating with the operating means (213), said blocking means (221) comprising at least one frangible tongue (222) arranged in a path of the operating means (213).

15. Dispensing device (202) as claimed in claim 14, **characterized in that** the or each frangible tongue (222) is connected with the discharge nozzle (208).

16. Dispensing device (202) as claimed in claim 15, **characterized in that** the blocking means (221) comprise a cover (224) closing off the discharge nozzle (208).

17. Dispensing device (101; 202) as claimed in any of the claims 1 to 16, **characterized by** a precompression system arranged between the pump (103; 203) and the discharge nozzle (108; 208).

18. Dispensing device (101; 202) as claimed in claim 17, **characterized in that** the pump (103; 203), a part of the precompression system and part of the conduits connecting the pump (103; 203) to the container (102; 201) and/or the discharge nozzle (108; 208) are integrally formed.

19. Dispensing device (101; 202) as claimed in claim 18, **characterized in that** a remaining part of the precompression system is preformed on the neck part (130) of the container (102; 201).

20. Dispensing device (101; 202) as claimed in any of the preceding claims, **characterized in that** the remaining part of the dispensing device is connected by means of a snap coupling to the neck part (130) of the container (102; 201) or to the part of the dispensing device preformed thereon.

21. Dispensing device (101; 202) as claimed in any one of the preceding claims, **characterized in that** the container (102; 201) and the part of the dispensing device preformed therewith are preformed by injection molding.

22. Dispensing device (101; 202) as claimed in claim 21, **characterized in that** the container (102; 201) is blow molded to an end form after the preforming.

23. Assembly of a neck part (130) of a container and a dispensing device (101; 202) as claimed in any of the preceding claims connected thereto.

24. Container (102; 201) for use in an assembly as claimed in claim 23, said container (102; 201) having a neck part (130) that is stiff and biasing means (116; 214) preformed on said neck part (130), said biasing means (116; 214) comprising at least one flexion and/or torsion spring (117; 215) and being arranged to be connected with a piston (111; 211, 212) of a pump (103; 203) in the remaining part of the dispensing device (101; 202).

25. A method of manufacturing and filling with a fluid a container (102; 201) having a neck part (130) with a dispensing device connected thereto, comprising the steps of:
a) simultaneously preforming, by injection moulding, the container (102; 201), its neck part (130) and a part of the dispensing device (101; 202) that is integral with said neck part (130), said part of the dispensing device (101; 202) that is integral with said neck part (130) comprising biasing means (116; 214) including at least one flexion and/or torsion spring (117; 215) for connection with a piston (111; 211, 212) of a pump (103; 203) of the dispensing device (101; 202);
b) forming the remaining part of the dispensing device (101; 202) including the pump (103; 203) and the piston (111; 211, 212);
c) blow moulding the preformed container (102; 201) into its final form;
d) filling the container (102; 201) with the fluid; and
e) assembling the dispensing device (101; 202) by connecting the remaining part thereof with the part preformed on the neck part (130), including connecting the biasing means (116; 214) to the piston (111; 211, 212), thus simultaneously closing the container (102; 201).

26. Method as claimed in claim 25, **characterized in that** the container (102; 201) is manufactured from a resiliently deformable thermoplastic material.

27. Method as claimed in any of the claims 25 to 26, **characterized in that** the remaining part of the dispensing device is connected by means of a snap coupling to the neck part (130) of the container (102; 201) or to the part of the dispensing device preformed thereon.

28. Method as claimed in any of the claims 25 to 27, **characterized in that** the container (102; 201) is filled in suspended position.

29. Method as claimed in any of the claims 25 to 28, **characterized in that** the remaining part of the dispensing device includes a pump (103; 203) having a displacement element that is moveable between first and second positions, the displaceable element being moved to its second position before the container (102; 201) is closed and being moved to its first position after the container (102; 201) is closed, such as to draw fluid into the pump (103; 203).

## Patentansprüche

1. Verteil-Vorrichtung (101; 202) zum Dosieren eines Fluids, welche an einem Behälter (102; 201) anschließbar ist, wobei mindestens ein Abschnitt der Verteil-Vorrichtung (101; 202) an einem Halsabschnitt (130) des Behälters (102; 210) vorgeformt ist und der Restabschnitt der Verteil-Vorrichtung (101; 202) daran angeschlossen ist, wobei die Verteil-Vorrichtung (101; 202) aufweist:
- mindestens eine Öffnung und mindestens ein SchließElement, welches mit der Öffnung zusammenwirkt und zwischen einer die Öffnung schließenden Position und einer die Öffnung freilassenden Position bewegbar ist,
- mindestens eine Pumpe (103; 203), welche zwischen dem Behälter (102; 201) und der Öffnung angeordnet ist, wobei die Pumpe (103; 203) eine Saugseite (105; 205) und eine Druckseite (106; 206) hat und einen Zylinder (110; 209, 210), welcher in dem Restabschnitt der Verteil-Vorrichtung (101; 202) integriert ist, und einen darin hin- und her bewegbaren Kolben (111; 211, 212) aufweist,
- bewegbare Betätigungsmittel (104, 213), welche an dem Kolben (111; 211, 212) angeschlossen sind zum Betätigen desselben,
- Belastungs-Elemente (116; 214), welche an dem Halsabschnitt (130) des Behälters (102; 210) vorgeformt sind, welche mit dem Kolben (111; 211, 212) verbunden sind zum Vorbelasten desselben hin zu einer Ruheposition,
- Mittel (107; 205), welche auf der Saugseite (105; 205) der Pumpe (103; 203) zum Fluid-Zuführen aus dem Behälter (102; 201) angeschlossen sind, und
- mindestens eine Strahldüse (108; 208), welche auf der Druckseite (106; 206) der Pumpe (103; 203) angeschlossen ist;
**dadurch gekennzeichnet, dass:**
- der Halsabschnitt (130) des Behälters (102; 201) steif ist, und
- die Kolben-Vorbelastungsmittel (116; 214) mindestens eine Biege- und/oder Torsionsfeder (117; 215) aufweisen, welche an dem Halsabschnitt (130) vorgeformt sind/ist.

2. Verteil-Vorrichtung (101; 202) gemäß Anspruch 1, **dadurch gekennzeichnet, dass** die Kolben-Vorbelastungsmittel (116; 214) zum Zusammenwirken mit den Betätigungsmitteln (104; 213) der Pumpe (103; 203) angeordnet sind.

3. Verteil-Vorrichtung (101; 202) gemäß Anspruch 2, **dadurch gekennzeichnet, dass** die Kolben-Vorbelastungsmittel (116; 214) eine Mehrzahl von im wesentlichen zueinander parallelen Federn (117; 215) aufweisen, welche mit den Betätigungsmitteln (104; 213) im Eingriff stehen.

4. Verteil-Vorrichtung (101) gemäß Anspruch 3, **dadurch gekennzeichnet, dass** die Federn (117) sich im wesentlichen senkrecht zu einer Längsachse des Behälters (102) erstrecken, wobei jede Feder (117) eine geschlossenen Kontur hat, welche die Pumpe (103) umgibt, und an einem Ende (118) an einem Ständer (119) fixiert ist, welcher an dem Halsabschnitt (130) fixiert ist.

5. Verteil-Vorrichtung (101; 202) gemäß Anspruch 3, **dadurch gekennzeichnet, dass** die Federn (117; 215) an gegenüberliegenden Seiten der Pumpe (103; 203) getrennt angeordnet sind und sich im Wesentlichen parallel zu einer Längsachse des Behälters (102; 201) erstrecken.

6. Verteil-Vorrichtung (101; 202) gemäß Anspruch 5, **dadurch gekennzeichnet, dass** die Federn (117; 215) kombinierte Biege- und Torsionsfedern sind, welche ein freies Ende haben, welches kurvenförmig ist.

7. Verteil-Vorrichtung (101; 202) gemäß einem der Ansprüche 2 bis 6, **dadurch gekennzeichnet, dass** die Betätigungsmittel (104; 213) an dem Kolben (111; 211, 212) angeschlossen sind, derart dass er unter Spannung und Druck fixiert ist.

8. Verteil-Vorrichtung (101; 202) gemäß Anspruch 7, **dadurch gekennzeichnet, dass** die Betätigungsmittel (104; 213) auf den Kolben (111; 211, 212) eingerastet sind,

9. Verteil-Vorrichtung (101; 202) gemäß einem der Ansprüche 1 bis 8, **dadurch gekennzeichnet, dass** die Pumpe (103; 203) ein Gehäuse aufweist, an welches die Betätigungsmittel (104; 213) bewegbar angeschlossen sind.

10. Verteil-Vorrichtung (101) gemäß Anspruch 9, **dadurch gekennzeichnet, dass** die Betätigungsmittel (104) einen Abzug (113) aufweisen, welcher auf der Pumpe schwenkbar eingerastet ist.

11. Verteil-Vorrichtung (202) gemäß einem der Ansprüche 1 bis 10, **dadurch gekennzeichnet, dass** die Pumpe (203) einen Arbeitszylinder (209) und einen Entlüftungszylinder (210) aufweist, welcher daran angeordnet ist, und dass die Betätigungsmittel (213) zum Verschieben der Kolben (211, 212) in diesen Zylindern (209, 210) auf synchronisierter Weise angeordnet sind.

12. Verteil-Vorrichtung (202) gemäß Anspruch 11, **dadurch gekennzeichnet, dass** die Betätigungsmittel (213) ein Drückerelement aufweisen und der oder jeder Kolben (211, 212) mit dem Drückerelement einstückig ausgebildet ist.

13. Verteil-Vorrichtung (202) gemäß Anspruch 11 oder 12, **gekennzeichnet durch** Mittel (236), welche in dem Entlüftungszylinder (210) zum Deformieren des Kolbens (212) angeordnet sind, welcher darin verschiebbar ist.

14. Verteil-Vorrichtung (202) gemäß einem der Ansprüche 1 bis 13, **gekennzeichnet durch** Blockiermittel (221), welche mit den Betätigungsmitteln (213) zusammenwirken, welche Blockiermittel (221) mindestens eine brechbare Zunge (222) aufweisen, welche in einer Bahn der Betätigungsmittel (213) angeordnet ist.

15. Verteil-Vorrichtung (202) gemäß Anspruch 14, **dadurch gekennzeichnet, dass** die oder jede brechbare Zunge (222) an der Strahldüse (208) angeschlossen ist.

16. Verteil-Vorrichtung (202) gemäß Anspruch 15, **dadurch gekennzeichnet, dass** die Blockiermittel (221) eine Abdeckung (224) aufweisen, welche die Strahldüse (208) verschließt.

17. Verteil-Vorrichtung (101; 202) gemäß einem der Ansprüche 1 bis 16, **gekennzeichnet durch** ein Vorverdichtungs-System, welches zwischen der Pumpe (103; 203) und der Strahldüse (108; 208) angeordnet ist.

18. Verteil-Vorrichtung (101; 202) gemäß Anspruch 17, **dadurch gekennzeichnet, dass** die Pumpe (103; 203), ein Teil des Vorverdichtungs-Systems und ein Teil der Leitungen, welche die Pumpe (103; 203) mit dem Behälter (102; 201) und/oder der Strahldüse (108; 208) verbinden, einstückig ausgebildet sind.

19. Verteil-Vorrichtung (101; 202) gemäß Anspruch 18, **dadurch gekennzeichnet, dass** ein Restabschnitt des Vorverdichtungs-Systems an dem Halsabschnitt (130) des Behälters (102; 201) vorgeformt ist.

20. Verteil-Vorrichtung (101; 202) gemäß einem der vorhergehenden Ansprüche, **dadurch gekennzeichnet, dass** der Restabschnitt der Verteil-Vorrichtung mittels einer Einrastkupplung an den Halsabschnitt (130) des Behälters (102; 201) oder an den Abschnitt der Verteil-Vorrichtung daran vorgeformt ist.

21. Verteil-Vorrichtung (101; 202) gemäß einem der vorhergehenden Ansprüche, **dadurch gekennzeichnet, dass** der Behälter (102; 201) und der Abschnitt der damit vorgeformten Verteil-Vorrichtung mittels Spritzgießen vorgeformt sind.

22. Verteil-Vorrichtung (101; 202) gemäß Anspruch 21, **dadurch gekennzeichnet, dass** der Behälter (102; 201) nach dem Vorformen zu einer Endform blasgeformt wird.

23. Anordnung eines Halsabschnitt (130) eines Behälters und einer Verteil-Vorrichtung (101; 202) gemäß einem der vorhergehenden Ansprüche, welche daran angeschlossen ist.

24. Behälter (102; 201) zum Verwenden in einer Anordnung gemäß Anspruch 23, wobei der Behälter (102; 201) einen Halsabschnitt (130), welcher steif ist, und Belastungsmittel (116; 214) aufweist, welche an dem Halsabschnitt (130) ausgeführt sind, wobei die Belastungsmittel (116; 214), welche an dem Halsabschnitt ausgeführt sind, mindesten eine Biege- und/oder Torsionsfeder (117; 215) aufweisen und angeordnet sind/ist zum Anschließen an einen Kolben (111; 211, 212) einer Pumpe (103; 203) in dem Restabschnitt der Verteil-Vorrichtung (101; 202).

25. Verfahren zum Herstellen von einem und Auffüllen mit einem Fluid von einem Behälter (102; 201), welcher einen Halsabschnitt (130) mit einer Verteil-Vorrichtung hat, welcher damit verbunden ist, welches die Schritte aufweist:
a) gleichzeitiges Vorformen durch Spritzgießen des Behälters (102; 201), seines Halsabschnitts (130) und eines Abschnitts der Verteil-Vorrichtung (101; 202), welche mit dem Halsabschnitt (130) einstückig ist, wobei der Abschnitt der Verteilvorrichtung (101; 202), welcher mit dem Halsabschnitt (130) einstückig ist, Belastungsmittel (116; 214) aufweist, welche mindestens eine Biege und/oder eine Torsionsfeder (117; 215) aufweisen zum Anschließen an einen Kolben (111; 211; 212) einer Pumpe (103; 203) der Verteil-Vorrichtung (101; 202),
b) Ausbilden des Restabschnitts der Verteil-Vorrichtung (101; 202), einschließlich der Pumpe (103; 203) und des Kolbens (111; 211, 212),
c) Blasformen des vorgeformten Behälters (102; 201) in seine endgültige Form,
d) Auffüllen des Behälters (102; 201) mit dem Fluid, und
e) Zusammenbauen der Verteil-Vorrichtung (101; 202) durch Anschließen des Restabschnitts davon an den Abschnitt, welcher an den Halsabschnitt (130) vorgeformt ist, einschließlich Anschließen der Belastungsmittel (116; 214) an den Kolben (111; 211, 212), wobei daher der Behälter (102; 201) gleichzeitig geschlossen wird.

26. Verfahren gemäß Anspruch 25, **dadurch gekennzeichnet, dass** der Behälter (102; 201) aus einem federnd deformierbaren Thermoplastik-Material ist.

27. Verfahren gemäß einem der Ansprüche 25 bis 26, **dadurch gekennzeichnet, dass** der Restabschnitt der Verteil-Vorrichtung mittels einer Einrastkupplung an den Halsabschnitt (130) des Behälters (102; 201) oder den Abschnitt der daran vorgeformten Verteil-Vorrichtung angechlossen ist.

28. Verfahren gemäß einem der Ansprüche 25 bis 27, **dadurch gekennzeichnet, dass** der Behälter (102; 201) in einer Hänge-Position befüllt wird.

29. Verfahren gemäß einem der Ansprüche 25 bis 28, **dadurch gekennzeichnet, dass** der Restabschnitt der Verteil-Vorrichtung eine Pumpe (103; 203) aufweist, welche ein Verschiebe-Element aufweist, welches zwischen einer Erst-Position und einer Zweit-Position bewegbar ist, wobei des Verschiebe-Element (102; 201) in seine Zweit-Position bewegt wird bevor der Behälter geschlossen und in seine Erst-Position bewegt wird, nachdem der Behälter (102; 201) geschlossen wird, so dass Fluid in die Pumpe saugbar ist.

## Revendications

1. Distributeur (101 ; 202) destiné à être connecté à un récipient (102 ; 201) pour distribution d'une dose d'un fluide, au moins une partie du distributeur (101 ; 202) étant préformée sur une partie à col (130) du récipient (102 ; 201) et la partie restante du distributeur (101 ; 202) étant connectée à celle-ci, ledit distributeur (101 ; 202) comprenant :
- au moins un élément d'ouverture et au moins un élément de fermeture co-agissant avec l'ouverture et se déplaçant entre une position fermant l'ouverture et une position laissant l'ouverture dégagée ;
- au moins une pompe (103 ; 203) agencée entre le récipient (102 ; 201) et l'ouverture, la pompe (103 ; 203) ayant un côté aspiration (105 ; 205) et un côté compression (105 ; 206) et comprenant un cylindre (110 ; 209, 210) intégré dans la partie restante du distributeur (101 ; 202) et un piston (111 ; 211, 212) alternatif dans celle-ci ;
- des moyens opératoires mobiles (104 ; 213) connectés au piston (111 ; 211, 212) pour en assurer le fonctionnement ;
- des moyens d'inclinaison (116 ; 214) préformés sur la partie à col (130) du récipient (102 ; 201) connectés avec le piston (111 ; 211, 212) pour l'incliner en position de repos ;
- des moyens (107 ; 205) connectés au côté aspiration (105 ; 205) de la pompe (103 ; 203) pour amener le fluide depuis le récipient (102 ; 20 1) ; et
- au moins une buse de refoulement (108 ; 208) connectée au côté compression (106 ; 206) de la pompe (103 ; 203) ;
**caractérisé en ce que** :
- la partie à col (130) du récipient (102 ; 201) est rigide ; et
- les moyens d'inclinaison du piston (116 ; 214) comprennent au moins un ressort de flexion et/ou de torsion (117 ; 215) préformé sur ladite partie à col (130).

2. Distributeur (101 ; 202) selon la revendication 1, **caractérisé en ce que** les moyens d'inclinaison du piston (116 ; 214) sont agencés pour coopérer avec les moyens opératoires (104 ; 213) de la pompe (103 ; 203).

3. Distributeur (101 ; 202) selon la revendication 2, **caractérisé en ce que** les moyens d'inclinaison du piston (116 ; 214) comprennent une pluralité de ressorts sensiblement parallèles (117 ; 215) qui engagent les moyens opératoires (104 ; 213).

4. Distributeur (101) selon la revendication 3 **caractérisé en ce que** les ressorts (117) s'étendent sensiblement de façon perpendiculaire à un axe longitudinal du récipient (102), chaque ressort (117) ayant un contour fermé entourant la pompe (103) et étant fixé sur une extrémité (118) à une colonne (119) qui est fixée à ladite partie en col (130).

5. Distributeur (101 ; 202) selon la revendication 3, **caractérisé en ce que** les ressorts (117 ; 215) sont agencés séparément sur des côtés opposés de la pompe (103 ; 203) et s'étendent sensiblement de façon parallèle à un axe longitudinal du récipient (102 ; 201).

6. Distributeur (101 ; 202) selon la revendication 5, **caractérisé en ce que** les ressorts (117 ; 215) sont des ressorts de torsion et de flexion combinés ayant une extrémité libre qui est formée dans une courbe.

7. Distributeur (101 ; 202) selon l'une quelconque des revendications 2 à 6, **caractérisé en ce que** les moyens opératoires (104 ; 213) sont connectés au piston (111 ; 211, 212) de façon à être fixes sous tension et compression.

8. Distributeur (101 ; 202) selon la revendication 7, **caractérisé en ce que** les moyens opératoires (104 ; 213) sont enclenchés sur le piston (111 ; 211, 212).

9. Distributeur (101 ; 202) selon l'une quelconque des revendications 1 à 8, **caractérisé en ce que** la pompe (103 ; 203) a un boîtier sur lequel les moyens opératoires (104 ; 213) sont connectés de façon mobile.

10. Distributeur (101) selon la revendication 9, **caractérisé en ce que** les moyens opératoires (104) comprennent une gâchette (113) s'enclenchant par charnière sur le boîtier de la pompe.

11. Distributeur (202) selon l'une quelconque des revendications 1 à 10 **caractérisé en ce que** la pompe (203) comprend un cylindre de travail (209) et un cylindre de ventilation (210) agencé après celle-ci, et **en ce que** les moyens opératoires (213) sont agencés pour déplacer les pistons (211, 212) dans ces cylindres (209, 210) de façon synchronisée.

12. Distributeur (202) selon la revendication 11, **caractérisé en ce que** les moyens opératoires (213) comprennent un organe de poussée et le ou chaque piston (211, 212) est intégralement formé avec l'organe pousseur.

13. Distributeur (202) selon la revendication 11 ou 12, **caractérisé par** des moyens (236) agencés dans le cylindre de ventilation (210) pour déformer le piston (212) qui peut se déplacer dans celui-ci.

14. Distributeur (202) selon l'une quelconque des revendications 1 à 13, **caractérisé par** des moyens de blocage (221) coopérant avec les moyens opératoires (213), lesdits moyens de blocage (221) comprenant au moins une languette cassable (222) agencée dans une voie des moyens opératoires (213).

15. Distributeur (202) selon la revendication 14, **caractérisé en ce que** la ou chaque languette cassable (222) est connectée avec la buse de refoulement (208).

16. Distributeur (202) selon la revendication 15, **caractérisé en ce que** les moyens de blocage (221) comprennent un couvercle (224) refermant la buse de refoulement (208).

17. Distributeur (101 ; 202) selon l'une quelconque des revendications 1 à 16, **caractérisé par** un système de précompression agencé entre la pompe (103 ; 203) et la buse de refoulement (108 ; 208).

18. Distributeur (101 ; 202) selon la revendication 17, **caractérisé en ce que** la pompe (103 ; 203), une partie du système de précompression et une partie des conduits reliant la pompe (103 ; 203) au récipient (102 ; 201) et/ou la buse de refoulement (108 ; 208) sont intégralement formés.

19. Distributeur (101 ; 202) selon la revendication 18, **caractérisé en ce qu'**une partie restante du système de pré-compression est préformée sur la partie en col (130) du récipient (102 ; 201).

20. Distributeur (101 ; 202) selon l'une quelconque des revendications précédentes, **caractérisé en ce que** la partie restante du distributeur est connectée au moyen d'un bouton pression couplé à la partie en col (130) du récipient (102 ; 201) ou à la partie du distributeur préformée sur celui-ci.

21. Distributeur (101 ; 202) selon l'une quelconque des revendications précédentes, **caractérisé en ce que** le récipient (102 ; 201) et la partie du distributeur préformée avec celui-ci sont préformés par moulage par injection.

22. Distributeur (101 ; 202) selon la revendication 21, **caractérisé en ce que** le récipient (102 ; 201) et moulé par soufflage à une forme d'extrémité après le préformage.

23. Ensemble d'une partie à col (130) d'un récipient et d'un distributeur (101 ; 202) selon l'une quelconque des revendications précédentes connecté à ceux-ci.

24. Récipient (102 ; 201) pour utilisation dans un ensemble selon la revendication 23, ledit récipient (102 ; 201) ayant une partie à col (130) qui est rigide et des moyens d'inclinaison (116 ; 214) préformés sur ladite partie à col (130), lesdits moyens d'inclinaison (116 ; 214) comprenant au moins un ressort de flexion et/ou de torsion (117 ; 215) et étant agencés pour être connectés avec un piston (111 ; 211, 212) d'une pompe (103 ; 203) dans la partie restante du distributeur (101 ; 202).

25. Procédé de fabrication et de remplissage avec un fluide d'un récipient (102 ; 201) ayant une partie à col (130) avec un distributeur connecté à celui-ci, comprenant les étapes consistant à :
a) préformer simultanément, par moulage par injection, le récipient (102 ; 201), sa partie à col (130) et une partie du distributeur (101 ; 202) qui est intégrale avec ladite partie à col (130), ladite partie du distributeur (101 ; 202) qui est intégrale avec ladite partie à col (130) comprenant des moyens d'inclinaison (116 ; 214) dotés au moins d'un ressort de flexion et/ou de torsion (117 ; 215) pour connexion avec un piston (111 ; 211, 212) d'une pompe (103 ; 203) du distributeur (101 ; 202) ;
b) former la partie restante du distributeur (101 ; 202) comprenant la pompe (103 ; 203) et le piston (111 ; 211, 212) ;
c) mouler par soufflage le récipient préformé (102 ; 201) dans sa forme finale ;
d) remplir le récipient (102 ; 201) avec le fluide ; et
e) assembler le distributeur (101 ; 202) en connectant la partie restante de celui-ci avec la partie préformée sur la partie à col (130), comprenant la connexion des moyens d'inclinaison (116 ; 214) au piston (111; 211, 212) pour fermer ainsi de façon simultanée le récipient (102 ; 201).

26. Procédé selon la revendication 25, **caractérisé en ce que** le récipient (102 ; 201) est fabriqué à partir d'un matériau thermoplastique déformable de façon flexible.

27. Procédé selon l'une quelconque des revendications 25 à 26, **caractérisé en ce que** la partie restante du distributeur est connectée au moyen d'un bouton de pression couplé à la partie à col (130) du récipient (102 ; 201) ou à la partie du distributeur préformée sur celui-ci.

28. Procédé selon l'une quelconque des revendications 25 à 27, **caractérisé en ce que** le récipient (102 ; 201) est rempli en position suspendue.

29. Procédé selon l'une quelconque des revendications 25 à 28, **caractérisé en ce que** la partie restante du distributeur comprend une pompe (103 ; 203) ayant un élément de déplacement qui peut se déplacer entre les première et seconde positions, l'élément déplaçable étant déplacé de sa seconde position avant la fermeture du récipient (102 ; 201) et étant déplacé à sa première position après fermeture du récipient (102 ; 201) de façon à aspirer le fluide dans la pompe (103 ; 203).
